# EUROPEAN PATENT APPLICATION

(11) **EP 4 011 837 A1**
(43) Date of publication of application: **15.06.2022**
(21) Application number: 20850423.3
(22) Date of filing: 06.08.2020
(51) Int. Cl.: C01G 53/00, H01M 4/505, H01M 4/525

(54) **NICKEL COMPOSITE HYDROXIDE, POSITIVE ELECTRODE ACTIVE MATERIAL HAVING NICKEL COMPOSITE HYDROXIDE AS PRECURSOR, AND METHODS FOR PRODUCTION THEREOF**

(30) Priority: 06.08.2019 JP 2019144821
(71) Applicant: Tanaka Chemical Corporation, Fukui-shi, Fukui 910-3131 (JP)
(72) Inventor: YASUDA, Taiki, Fukui-shi, Fukui 910-3131 (JP); KOBAYASHI, Ryota, Fukui-shi, Fukui 910-3131 (JP)
(74) Representative: Weickmann, Hans
(86) International application number: PCT/JP2020/030130
(87) International publication number: WO 2021/025100

(57) **Abstract**

An object of the present invention is to provide a precursor of a positive electrode active material, capable of obtaining the positive electrode active material that can exhibit a high discharge capacity, high charge/discharge efficiency, and rate characteristics by being mounted on a secondary battery using a non-aqueous electrolyte.

The nickel composite hydroxide that is a precursor of a positive electrode active material of a non-aqueous electrolyte secondary battery, comprising Ni, Co, and one or more additive metal elements M selected from the group consisting of Mn, Al, Fe, and Ti, wherein when a peak intensity of a diffraction peak appearing in a range of 2θ = 8.0 ± 2.0° in powder X-ray diffraction measurement using CuKα rays is defined as α, and a peak intensity of a diffraction peak appearing in a range of 2θ = 19.0 ± 2.0° in powder X-ray diffraction measurement using CuKα rays is defined as β, of the nickel composite hydroxide having a secondary particle diameter having a cumulative volume percentage of 90% by volume (D90) or more, a value of β/α is 13.0 or less.

## Description

### Technical Field

The present invention relates to a nickel composite hydroxide, a positive electrode active material using the nickel composite hydroxide as a precursor, and a method for producing the same, and particularly relates to a nickel composite hydroxide, a positive electrode active material using the nickel composite hydroxide as the precursor, and a method for producing the same, which are capable of obtaining a non-aqueous electrolyte secondary battery excellent in a discharge capacity, charge/discharge efficiency and rate characteristics.

### Background Art

In recent years, from the viewpoint of reducing the environmental load, secondary batteries have been used in a wide range of fields such as mobile devices and vehicles that use electricity or combine it for use as a power source. Examples of the secondary batteries include a secondary battery using a non-aqueous electrolyte such as a lithium ion secondary battery. The secondary battery using a non-aqueous electrolyte such as a lithium ion secondary battery is suitable for miniaturization and weight reduction, and has an excellent characteristic such as a high utilization ratio.

Moreover, in addition to the aforementioned various characteristics, the secondary battery is also required to exhibit a high capacity, high charge/discharge efficiency, rate characteristics, and excellent cycle characteristics in repeated charge/discharge. Therefore, a positive electrode active material of a lithium ion secondary battery exhibiting excellent cycle characteristics, which is for example, lithium manganese composite oxide particles having crystal structures of α-type MnO₂, has been proposed (Patent Literature 1).

Although the cycle characteristics are improved by allowing the particles to be highly converted to lithium in Patent Literature 1, there is room for improvement in terms of a high discharge capacity, charge/discharge efficiency, and rate characteristics.

### Document List

### Patent Literature

Patent Literature 1: Japanese Patent Application Laid-Open No. 2000-327340

### Summary of Invention

### Technical Problem

In view of the above circumstances, an object of the present invention is to provide a precursor of a positive electrode active material, capable of obtaining the positive electrode active material that can exhibit a high discharge capacity, high charge/discharge efficiency, and rate characteristics by being mounted on a secondary battery using a non-aqueous electrolyte, and the positive electrode active material obtained from the precursor, as well as a method for producing the precursor and the positive electrode active material.

### Solution to Problem

The gist of configuration of the present invention is as follows:
[1] A nickel composite hydroxide that is a precursor of a positive electrode active material of a non-aqueous electrolyte secondary battery, comprising Ni, Co, and one or more additive metal elements M selected from the group consisting of Mn, Al, Fe, and Ti,
   wherein when a peak intensity of a diffraction peak appearing in a range of 2θ = 8.0 ± 2.0° in powder X-ray diffraction measurement using CuKα rays is defined as α, and a peak intensity of a diffraction peak appearing in a range of 2θ = 19.0 ± 2.0° in powder X-ray diffraction measurement using CuKα rays is defined as β, of the nickel composite hydroxide having a secondary particle diameter having a cumulative volume percentage of 90% by volume (D90) or more, a value of β/α is 13.0 or less.
[2] The nickel composite hydroxide according to [1], wherein a tap density is 1.50 g/ml or more and 1.90 g/ml or less.
[3] The nickel composite hydroxide according to [1] or [2], wherein a BET specific surface area is 30 m²/g or more and 60 m²/g or less.
[4] The nickel composite hydroxide according to any one of [1] to [3], wherein a molar ratio of Ni: Co : M is 1-x-y : x : y, where 0 < x ≤ 0.2 and 0 < y ≤ 0.1.
[5] A positive electrode active material of a non-aqueous electrolyte secondary battery, wherein the nickel composite hydroxide according to any one of [1] to [4] is calcined with a lithium compound.
[6] A method for producing a nickel composite hydroxide that is a precursor of a positive electrode active material of a non-aqueous electrolyte secondary battery, comprising Ni, Co, and one or more additive metal elements M selected from the group consisting of Mn, Al, Fe, and Ti, the method comprising:
   a neutralization reaction step of mixing an aqueous solution containing at least a Ni salt, a Co salt, and a salt of the additive metal element, a pH adjuster, and an aqueous solution containing an ammonium ion donor in a reaction vessel, and performing a coprecipitation reaction in the mixed liquid to obtain a crude nickel composite hydroxide, wherein when a peak intensity of a diffraction peak appearing in a range of 2θ = 8.0 ± 2.0° in powder X-ray diffraction measurement using CuKα rays is defined as α', and a peak intensity of a diffraction peak appearing in a range of 2θ = 19.0 ± 2.0° in powder X-ray diffraction measurement using CuKα rays is defined as β', of the crude nickel composite hydroxide, an ammonia concentration and a pH based on a liquid temperature of 40°C, of the mixed liquid are controlled so that a value of β'/α' is 13.0 or less; and
   a solid-liquid separation step of washing the crude nickel composite hydroxide obtained in the neutralization reaction step with an alkaline aqueous solution followed by solid-liquid separation to obtain the nickel composite hydroxide.
[7] The method for producing a nickel composite hydroxide according to [6], wherein a molar ratio of Ni : Co : M is 1-x-y : x : y, where 0 < x ≤ 0.2 and 0 < y ≤ 0.1.
[8] The method for producing a nickel composite hydroxide according to [6] or [7], wherein the ammonia concentration is less than 12.0 g/L, and the pH based on a liquid temperature of 40°C is 11.0 or more and 12.5 or less.
[9] The method for producing a nickel composite hydroxide according to any one of [6] to [8], wherein in the solid-liquid separation step, a solid phase is washed with water after the solid-liquid separation.
[10] The method for producing a nickel composite hydroxide according to any one of [6] to [9], further comprising a drying step of drying the nickel composite hydroxide after the solid-liquid separation step.
[11] A method for producing a positive electrode active material of a non-aqueous electrolyte secondary battery using a nickel composite hydroxide as a precursor, comprising Ni, Co, and one or more additive metal elements M selected from the group consisting of Mn, Al, Fe, and Ti, the method comprising:
   a neutralization reaction step of mixing an aqueous solution containing at least a Ni salt and a Co salt, an aqueous solution containing a salt of the additive metal element, an aqueous solution containing an ammonium ion donor, and a pH adjuster in a reaction vessel, and performing a coprecipitation reaction in the mixed liquid to obtain a crude nickel composite hydroxide, wherein when a peak intensity of a diffraction peak appearing in a range of 2θ = 8.0 ± 2.0° in powder X-ray diffraction measurement using CuKα rays is defined as α', and a peak intensity of a diffraction peak appearing in a range of 2θ = 19.0 ± 2.0° in powder X-ray diffraction measurement using CuKα rays is defined as β', of the crude nickel composite hydroxide, an ammonia concentration and a pH based on a liquid temperature of 40°C, of the mixed liquid are controlled so that a value of β'/α' is 13.0 or less;
   a solid-liquid separation step of washing the crude nickel composite hydroxide obtained in the neutralization reaction step with an alkaline aqueous solution followed by solid-liquid separation to obtain the nickel composite hydroxide;
   a step of adding a lithium compound to the obtained nickel composite hydroxide to obtain a mixture of the lithium compound and the nickel composite hydroxide, or a step of subjecting the obtained nickel composite hydroxide to an oxidation treatment to prepare a nickel composite oxide followed by addition of a lithium compound to obtain a mixture of the lithium compound and the nickel composite oxide; and
   a step of calcining the mixture.
[12] A method for producing a positive electrode active material of a non-aqueous electrolyte secondary battery, comprising: a step of adding a lithium compound to the nickel composite hydroxide according to any one of [1] to [4] to obtain a mixture, or a step of subjecting the nickel composite hydroxide according to any one of [1] to [4] to an oxidation treatment to prepare a nickel composite oxide followed by addition of a lithium compound to obtain a mixture of the lithium compound and the nickel composite oxide; and a step of calcining the mixture.

### Effects of Invention

According to an aspect of the present invention, when a peak intensity of a diffraction peak appearing in a range of 2θ = 8.0 ± 2.0° in powder X-ray diffraction measurement using CuKα rays is defined as α, and a peak intensity of a diffraction peak appearing in a range of 2θ = 19.0 ± 2.0° in powder X-ray diffraction measurement using CuKα rays is defined as β, of the nickel composite hydroxide having a secondary particle diameter having a cumulative volume percentage of 90% by volume (D90) or more, a value of β/α being 13.0 or less can exhibit a high discharge capacity, high charge/discharge efficiency, and rate characteristics by mounting the positive electrode active material using this nickel composite hydroxide as a precursor on a secondary battery.

According to the aspect of the present invention, a tap density being 1.50 g/ml or more and 1.90 g/ml or less can improve a filling degree of the positive electrode active material in a positive electrode and the contactability with a non-aqueous electrolyte in a well-balanced manner.

According to the aspect of the present invention, a BET specific surface area being 30 m²/g or more and 60 m²/g or less can improve a crush strength of the positive electrode active material while ensuring the filling degree of the positive electrode active material in the positive electrode and securing a contact surface with the non-aqueous electrolyte.

According to the aspect of the present invention, in a neutralization reaction step, by adjusting an ammonia concentration to less than 12.0 g/L and a pH based on a liquid temperature of 40°C to 11.0 or more and 12.5 or less, a value of β'/α' of a crude nickel composite hydroxide can be definitely controlled to 13.0 or less, and as a result, by controlling the above value of β/α of the nickel composite hydroxide having a secondary particle diameter having a cumulative volume percentage of 90% by volume (D90) or more, to 13.0 or less, and by mounting the positive electrode active material using the nickel composite hydroxide as a precursor on a secondary battery, it can definitely exhibit a high discharge capacity, high charge/discharge efficiency, and rate characteristics.

### Brief Description of Drawings

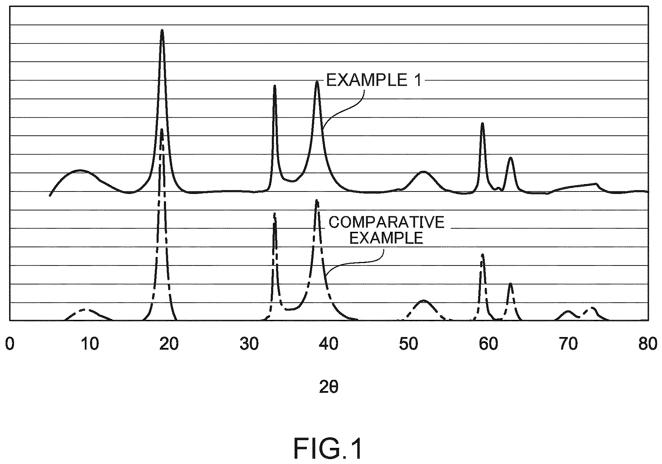

[FIG. 1] Powder X-ray diffraction patterns obtained by powder X-ray diffraction measurement using CuKα rays, of nickel composite hydroxides having a secondary particle diameter having a cumulative volume percentage of 90% by volume (D90) or more, for the nickel composite hydroxides of Examples and Comparative Example.

### Description of Embodiments

Hereinafter, the nickel composite hydroxide that is the precursor of the positive electrode active material of a non-aqueous electrolyte secondary battery of the present invention will be described in detail below. The nickel composite hydroxide that is the precursor of the positive electrode active material of a non-aqueous electrolyte secondary battery of the present invention (hereinafter, may be simply referred to as "nickel composite hydroxide of the present invention") contains nickel (Ni), cobalt (Co), and one or more additive metal elements (M) selected from the group consisting of manganese (Mn), aluminum (Al), iron (Fe), and titanium (Ti). Namely, the nickel composite hydroxide of the present invention contains Ni and Co as essential metal components, and further contains one or more metal elements of Mn, Al, Fe, and Ti as the additive metal elements (M). By adding the additive element (M), the above value of β/α can be 13.0 or less, and by mounting the positive electrode active material using this nickel composite hydroxide as the precursor on a secondary battery can exhibit the high discharge capacity, the high charge/discharge efficiency, and the rate characteristics.

The nickel composite hydroxide of the present invention is a secondary particle formed by aggregation of a plurality of primary particles. A particle shape of the nickel composite hydroxide of the present invention is not particularly limited and has a wide variety of shapes, and examples thereof can include a substantially spherical shape and a substantially elliptical shape.

For the nickel composite hydroxide having a secondary particle diameter having a cumulative volume percentage of 90% by volume (hereinafter, may be simply referred to as "D90") or more, when a peak intensity of a diffraction peak appearing in a range of 2θ = 8.0 ± 2.0° in powder X-ray diffraction measurement using CuKα rays is defined as α, and a peak intensity of a diffraction peak appearing in a range of 2θ = 19.0 ± 2.0° in powder X-ray diffraction measurement using CuKα rays is defined as β, the nickel composite hydroxide of the present invention controls a value of β/α to 13.0 or less. By controlling the above value of β/α to 13.0 or less and mounting the positive electrode active material using the nickel composite hydroxide of the present invention as the precursor on a secondary battery, the secondary battery can exhibit the high discharge capacity, high charge/discharge efficiency, and the rate characteristics.

An upper limit value of β/α is not particularly limited as long as it is controlled to 13.0 or less, but more preferably 11.0 or less and particular preferably 9.0 or less from the viewpoint of further improving the discharge capacity, charge/discharge efficiency and rate characteristics. A lower limit value of β/α is, on the other hand, preferably 3.0 or more, from the viewpoint of preventing, for example, an uptake of impurities. The above upper limit values and lower limit values can be arbitrarily combined.

In the nickel composite hydroxide of the present invention, a molar ratio of Ni : Co : M is not particularly limited and can be appropriately selected depending on, for example, the conditions of use of the positive electrode active material obtained from the nickel composite hydroxide. Examples of the molar ratio of Ni: Co : M include 1-x-y : x : y where 0 < x ≤ 0.2, 0 < y ≤ 0.1.

The additive metal element contains preferably Al and Mn, and particularly preferably Al in terms of facilitating to control the value of β/α to 13.0 or less.

A tap density (TD) of the nickel composite hydroxide of the present invention is not particularly limited, but for example, a lower limit value thereof is preferably 1.50 g/ml or more and particularly preferably 1.60 g/ml or more from the viewpoint of improving the filling degree of the positive electrode active material in the positive electrode. An upper limit value of the tap density of the nickel composite hydroxide of the present invention is, on the other hand, preferably 1.90 g/ml or less and particularly preferably 1.80 g/ml or less from the viewpoint of improving, for example, contactability between the positive electrode active material and the non-aqueous electrolyte. The above upper limit values and lower limit values can be arbitrarily combined.

A BET specific surface area of the nickel composite hydroxide of the present invention is not particularly limited, but for example, a lower limit value thereof is 30 m²/g or more and particularly preferably 35 m²/g or more from the viewpoint of improving the filling degree of the positive electrode active material in the positive electrode and the contact area with the non-aqueous electrolyte. An upper limit value of the BET specific surface area of the nickel composite hydroxide of the present invention is, on the other hand, preferably 60 m²/g or less and particularly preferably 50 m²/g or less from the viewpoint of improving the crush strength of the positive electrode active material. It is noted that the above upper limit values and lower limit values can be arbitrarily combined.

A particle diameter of the nickel composite hydroxide of the present invention is not particularly limited, but for example, a lower limit value of a secondary particle diameter having a cumulative volume percentage of 50% by volume (hereinafter, may be simply referred to as "D50") is preferably 5.0 µm or more and particularly preferably 8.0 µm or more from the viewpoint of improvement of the density. An upper limit value of D50 of the nickel composite hydroxide of the present invention is, on the other hand, preferably 25.0 µm or less and particularly preferably 20.0 µm or less from the viewpoint of improving the contactability with the non-aqueous electrolyte. The above upper limit values and lower limit values can be arbitrarily combined. Moreover, a lower limit value of D90 of the nickel composite hydroxide of the present invention is preferably 10.0 µm or more and particularly preferably 15.0 µm or more from the viewpoint of improvement of the density. An upper limit value of D90 of the nickel composite hydroxide of the present invention is, on the other hand, preferably 40.0 µm or less and particularly preferably 35.0 µm or less from the viewpoint of improving the contactability with the non-aqueous electrolyte. It is noted that the above upper limit values and lower limit values can be arbitrarily combined. Further, a lower limit value of the secondary particle diameter having a cumulative volume percentage of 10% by volume (hereinafter, may be simply referred to as "D10") of the nickel composite hydroxide of the present invention is preferably 1.0 µm or more and particularly preferably 5.0 µm or more from the viewpoint of improvement of the density. An upper limit value of D10 of the nickel composite hydroxide of the present invention is, on the other hand, preferably 15.0 µm or less and particularly preferably 10.0 µm or less from the viewpoint of improving the contactability with the non-aqueous electrolyte. The above upper limit values and lower limit values can be arbitrarily combined. It is noted that D10, D50, and D90 refer to particle diameters measured by a particle size distribution measuring apparatus by using a laser diffraction/scattering method.

Moreover, a particle diameter distribution width of the nickel composite hydroxide of the present invention is not particularly limited, but a lower limit value of (D90 - D10)/D50 is preferably 0.40 or more and particularly preferably 0.70 or more from the viewpoint of improving a mounting density of the positive electrode active material. An upper limit value of (D90 - D10)/D50 of the nickel composite hydroxide of the present invention is, on the other hand, preferably 1.10 or less and particularly preferably 1.00 or less from the viewpoint of uniformizing various properties of the positive electrode active material regardless of a size of the particle diameter of the nickel composite hydroxide. The above upper limit values and lower limit values can be arbitrarily combined.

Next, the method for producing the nickel composite hydroxide of the present invention will be described. First, by a coprecipitation method for appropriately adding a solution containing a nickel salt (for example, the sulfate), a cobalt salt (for example, the sulfate) and a salt of the additive metal element (for example, the sulfate), a complexing agent, and a pH adjuster to allow a neutralization reaction to occur in a reaction vessel, a crude nickel composite hydroxide is prepared to obtain a slurry suspension containing the crude nickel composite hydroxide. A solvent of the suspension that is, for example, water is used. Moreover, an aspect of the crude nickel composite hydroxide includes a particulate state thereof.

The complexing agent is not particularly limited provided that it can form a complex with ions of nickel, cobalt, and the additive metal element in an aqueous solution, and includes, for example, an ammonium ion donor. The ammonium ion donor includes, for example, aqueous ammonia, ammonium sulfate, ammonium chloride, ammonium carbonate, ammonium fluoride, etc. Upon neutralization reaction, in order to adjust a pH value of an aqueous solution, optionally an alkaline metal hydroxide (for example, sodium hydroxide or potassium hydroxide) may be added as the pH adjuster.

When a metal salt solution containing the aforementioned nickel, cobalt, and the additive metal element, the pH adjuster, and the ammonium ion donor are appropriately supplied to a reaction vessel in a continuous manner, and the substances in the reaction vessel are appropriately stirred, the metals (nickel, cobalt, the additive metal element) of the metal salt solution perform a coprecipitation reaction to prepare a crude nickel composite hydroxide. Upon the coprecipitation reaction, a temperature of the reaction vessel is controlled in the range of, for example, 10°C to 80°C and preferably 20 to 70°C. When supplying the pH adjuster and the ammonium ion donor to the reaction vessel and allowing them to perform the coprecipitation reaction, an ammonia concentration and a pH based on a liquid temperature of 40°C, of the mixed liquid in the reaction vessel, are controlled within a predetermined range, and thereby a value of β'/α'of a crude nickel composite hydroxide can be controlled to 13.0 or less. Controlling the value of β'/α'of the crude nickel composite hydroxide to be 13.0 or less facilitates the value of β/α of a purified nickel composite hydroxide described below having D90 or more, to be controlled to 13.0 or less. Preferred ranges of the ammonia concentration and the pH based on a liquid temperature of 40°C may need to be adjusted depending on a composition of the crude nickel composite hydroxide, and for example, the ammonia concentration is preferably less than 12.0 g/L and particularly preferably 7.0 g/L or more and 11.0 g/L or less. Moreover, the pH based on a liquid temperature of 40°C is preferably 11.0 or more and 12.5 or less and particularly preferably 11.5 or more and 12.3 or less.

The reaction vessel used in the method for producing the nickel composite hydroxide of the present invention can include, for example, a continuous type that overflows the obtained crude nickel composite hydroxide to separate it, and a batch type that does not discharge it to an outside of the system until a reaction is completed.

As described above, after the crude nickel composite hydroxide obtained in the neutralization reaction step is filtered from the suspension, it is washed with an alkaline aqueous solution to remove impurities contained in the crude nickel composite hydroxide, and then to obtain a purified nickel composite hydroxide (the nickel composite hydroxide of the present invention). Then, it is subjected to solid-liquid separation, the solid phase containing the nickel composite hydroxide is optionally washed with water, and the nickel composite hydroxide is heat-treated and dried to enable a powdery nickel composite hydroxide to be obtained.

Next, the positive electrode active material of a non-aqueous electrolyte secondary battery using the nickel composite hydroxide of the present invention as the precursor (hereinafter, may be simply referred to as the "positive electrode active material of the present invention") will be described. The positive electrode active material of the present invention is an aspect such that the nickel composite hydroxide of the present invention that is the precursor, has been calcined with, for example, a lithium compound. A crystal structure of the positive electrode active material of the present invention is a layered structure, and is more preferably a hexagonal crystal structure or a monoclinic crystal structure in order to obtain a secondary battery having a high discharge capacity. The positive electrode active material of the present invention can be used, for example, as the positive electrode active material of a lithium ion secondary battery. When producing the positive electrode active material of the present invention, a step of preparing a nickel composite hydroxide into a nickel composite oxide may be carried out in advance. A method for preparing the nickel composite oxide from the nickel composite hydroxide can include an oxidation treatment of calcining the nickel composite hydroxide in the range of a temperature of 300°C or higher and 800°C or lower for 1 hour or longer and 10 hours or shorter in an atmosphere in which oxygen gas is present.

Next, the method for producing the positive electrode active material of the present invention will be described. For example, the method for producing the positive electrode active material of the present invention is a method for first adding a lithium compound to the nickel composite hydroxide or the nickel composite oxide to prepare a mixture of the nickel composite hydroxide or the nickel composite oxide, and the lithium compound. The lithium compound is not particularly limited as long as it is a compound having lithium, and can include, for example, lithium carbonate and lithium hydroxide.

Next, the positive electrode active material can be produced by calcining the obtained mixture. Calcination conditions include, for example, a calcination temperature of 700°C or higher and 1000°C or lower, a rate of temperature rise of 50°C/h or higher and 300°C/h or lower, and a calcination time of 5 hours or longer and 20 hours or shorter. The calcination atmosphere is not particularly limited, and includes, for example, the atmosphere and oxygen. Moreover, a calcination furnace used for calcination is not particularly limited and includes, for example, a stationary box furnace and a roller Hearth continuous furnace.

The calcined product obtained as described above may be washed. Pure water or an alkaline cleaning solution can be used for cleaning. The alkaline cleaning solution can include, for example, an aqueous solution of one or more anhydrides and hydrates thereof selected from the group consisting of LiOH (lithium hydroxide), NaOH (sodium hydroxide), KOH (potassium hydroxide), Li₂CO₃ (lithium carbonate), Na₂CO₃ (sodium carbonate), K₂CO₃ (potassium carbonate) and (NH₄)₂CO3 (ammonium carbonate). Moreover, the alkaline cleaning solution that is ammonia can also be used.

In the cleaning step, a method for allowing the cleaning solution and a calcined product to contact with each other includes, for example, a method for charging the calcined product into an aqueous solution of each cleaning solution followed by stirring, or a method for applying an aqueous solution of each cleaning solution as shower water to the calcined product, or a method for charging the calcined product into an aqueous solution of the cleaning solution followed by stirring, then separating the calcined product from the aqueous solution of each cleaning solution, and next applying an aqueous solution of each cleaning solution as shower water to the calcined product after the separation.

When carrying out the aforementioned cleaning, after the cleaning, the cleaning material is separated from the cleaning solution by filtration, etc., and a heat treatment is carried out. The heat treatment conditions include, for example, a heat treatment temperature of 100°C or higher and 600°C or lower and a heat treatment time of 1 hour or longer and 20 hours or shorter. An atmosphere of the heat treatment is not particularly limited, but includes, for example, the atmosphere, oxygen, a vacuum atmosphere, etc.

Next, the positive electrode using the positive electrode active material of the present invention will be described. The positive electrode comprises a positive electrode current collector and a positive electrode active material layer formed on the surface of the positive electrode current collector by using the positive electrode active material of the present invention. The positive electrode active material layer has the positive electrode active material of the present invention, a binder, and optionally a conductive auxiliary agent. The conductive auxiliary agent is not particularly limited as long as it can be used for a non-aqueous electrolyte secondary battery, and a carbon material can be used. The carbon material can include graphite powder, carbon black (for example, acetylene black), and a fibrous carbon material. The binder is not particularly limited, but can include polymer resins, for example, polyvinylidene difluoride (PVdF), butadiene rubber (BR), polyvinyl alcohol (PVA), carboxymethyl cellulose (CMC), and polytetrafluoroethylene (PTFE), etc., as well as combinations thereof. The positive electrode current collector is not particularly limited, but a belt-shaped member made of a metal material such as Al, Ni, or stainless steel can be used. Among them, a member such that Al is used as a forming material and is processed into a thin film in terms of facilitation of processing and inexpensiveness.

The method for producing the positive electrode is, for example, a method for first preparing a positive electrode active material slurry by mixing the positive electrode active material of the present invention, the conductive auxiliary agent, and the binder. Next, the positive electrode current collector is coated with the aforementioned positive electrode active material slurry by a known filling method, dried, pressed and fixed to enable a positive electrode to be obtained.

The positive electrode thus obtained as described above by using the positive electrode active material, a negative electrode having a negative electrode current collector and a negative electrode active material layer containing a negative electrode active material, formed on the surface of the negative electrode current collector, an electrolytic solution containing a predetermined electrolyte, and a separator, are mounted by a known method to enable a non-aqueous electrolyte secondary battery to be assembled.

The electrolyte contained in the electrolytic solution include LiClO₄, LiPF₆, LiAsF₆, LiSbF₆, LiBF₄, LiCF₃SO₃, LiN (SO₂CF₃)₂, LiN(SO₂C₂F₅)₂, LiN(SO₂CF₃)(COCF₃), Li(C₄F₉SO₃), LiC(SO₂CF₃)₃ Li₂B₁₀Cl₁₀, LiBOB where BOB denotes bis(oxalato)borate, LiFSI where FSI denotes bis(fluorosulfonyl)imide, a lower aliphatic carboxylic acid lithium salt, a lithium salts such as LiAlCl₄. They may be used alone or in combination of two or more.

Moreover, dispersing media for the electrolyte contained in the electrolytic solution include, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy) ethane; ethers such as 1,2-dimethoxyethane, 1,3-dimethoxypropane, pentafluoropropylmethyl ether, 2,2,3,3-tetrafluoropropyldifluoromethyl ether, tetrahydrofuran, and 2-methyltetrahydrofuran; esters such as methyl formate, methyl acetate, and γ-butyrolactone; nitriles such as acetonitrile and butyronitrile; amides such as N,N-dimethylformamide, and N,N-dimethylacetamide; carbamates such as 3-methyl-2-oxazolidone; sulfur-containing compounds such as sulfolane, dimethyl sulfoxide, and 1,3-propanesultone, or solvents such that a fluoro group is further introduced into these organic solvents (one or more of hydrogen atoms of the organic solvent are substituted with fluorine atoms), can be used. They may be used alone or in combination of two or more.

Further, a solid electrolyte may be used instead of the above electrolytic solution. As the solid electrolyte, for example, an organic polymer electrolyte such as a polyethylene oxide-based polymer compound or a polymer compound containing at least one or more of a polyorganosiloxane chain or a polyoxyalkylene chain, can be used. Moreover, a so-called gel type compound in which a non-aqueous electrolytic solution is retained in a polymer compound, can also be used. Further, it includes inorganic solid electrolytes containing sulfides such as Li₂S-SiS₂, Li₂S-GeS₂, Li₂S-P₂S₅, Li₂S-B₂S₃, Li₂S-SiS₂-Li₃PO₄, Li₂S-SiS₂-Li₂SO₄, and Li₂S-GeS₂-P₂S₅. They may be used alone or in combination of two or more.

The separator includes, for example, a material having a form such as a porous film, a non-woven fabric, and a woven fabric, which is made of a material such as a polyolefin resin such as polyethylene and polypropylene, a fluororesin, and a nitrogen-containing aromatic polymer.

### Examples

Next, examples of the nickel composite hydroxide of the present invention will be described, but the present invention is not limited to these examples as long as the present invention does not deviate from the gist of the present invention.

### Production of nickel composite hydroxides of Examples and Comparative Example

### Production of nickel composite hydroxide of Example 1

An aqueous solution prepared by dissolving nickel sulfate, cobalt sulfate, and aluminum sulfate at a predetermined ratio, an aqueous solution of ammonium sulfate (ammonium ion donor), and an aqueous solution of sodium hydroxide were added dropwise to a reaction vessel, and a mixed liquid in the reaction vessel was continuously stirred with a stirrer while maintaining the pH of the mixed liquid in the reaction vessel at 12.1 based on a liquid temperature of 40°C and the ammonia concentration at 9.5 g/L. Moreover, the temperature of the mixed liquid in the reaction vessel was maintained at 40.0°C. The crude nickel composite hydroxide produced by the neutralization reaction was allowed to retain in the reaction vessel for 10.2 hours, and then to be overflowed from an overflow pipe of the reaction vessel and taken out as a suspension. After filtering a portion of the suspension, it was washed with pure water and subjected to solid-liquid separation and drying treatment, to carry out powder X-ray diffraction measurement of the aforementioned crude nickel composite hydroxide. The β'/α' of the aforementioned crude nickel composite hydroxide at this point was confirmed to be 13.0 or less. The suspension of the crude nickel composite hydroxide that was taken out was filtered, washed with an alkaline aqueous solution (8% by mass of an aqueous solution of sodium hydroxide), and subjected to solid-liquid separation. Then, the separated solid phase was washed with water, and further subjected to each treatment of dehydration and drying to obtain a powdery purified nickel composite hydroxide.

### Production of nickel composite hydroxide of Example 2

A powdery purified nickel composite hydroxide was obtained in the similar manner as in Example 1 except that the proportion of nickel sulfate, cobalt sulfate and aluminum sulfate was changed and the pH of the mixed liquid in the reaction vessel was maintained at 12.0 based on a liquid temperature of 40°C and the ammonia concentration was maintained at 9.0 g/L.

### Production of nickel composite hydroxide of Comparative Example

A powdery purified nickel composite hydroxide was obtained in the similar manner as in Examples 1 and 2 except that the pH of the mixed liquid in the reaction vessel was maintained at 12.7 based on a liquid temperature of 40°C, the ammonia concentration was maintained at 12.0 g/L, and the β'/α' of the crude nickel composite hydroxide at the point when taken out as the suspension, was confirmed to be larger than 13.0.

Table 1 below shows the neutralization reaction conditions of the nickel composite hydroxides of Examples 1 and 2 and Comparative Example.

The evaluation items of the physical properties of the nickel composite hydroxides of Examples 1 and 2 and Comparative Example are as follows.

### (1) Composition analysis of nickel composite hydroxide

Composition analysis was carried out by dissolving the obtained nickel composite hydroxide in hydrochloric acid and then using an inductively coupled plasma emission spectrometer (Optima 7300DV, manufactured by PerkinElmer Japan Co., Ltd.).

### (2) D50, D90, and D10

They were measured with a particle size distribution measuring device (LA-950, manufactured by HORIBA, Ltd.) (the principle is based on a laser diffraction/scattering method).

### (3) Tap density

The tap density was measured by a constant volume measuring method among the methods described in JIS R1628 with a tap denser (KYT-4000 manufactured by Seishin Co., Ltd.).

### (4) BET specific surface area

After 1 g of nickel composite hydroxide was dried at 105°C for 30 minutes in a nitrogen atmosphere, it was measured by a one-point BET method using a specific surface area measuring apparatus (Macsorb, manufactured by Mountech Co., Ltd.).

Table 1 below shows the evaluation results of the physical properties of the nickel composite hydroxides of Examples 1 and 2 and Comparative Example.

**[Table 1]**

| | Unit | Example 1 | Example 2 | Comparative Example |
|---|---|---|---|---|
| Neutralization temperature | °C | 40,0 | 40,0 | 40,0 |
| Neutralization pH | - | 12,1 | 12,0 | 12,7 |
| Ammonium concentration | g/L | 9,5 | 9,0 | 12,0 |
| Retention time | hr | 10,2 | 10,2 | 10,2 |
| D10 | µm | 6,7 | 6,8 | 6,8 |
| D50 | µm | 11,9 | 12,0 | 12,4 |
| D90 | µm | 18,4 | 18,5 | 19,7 |
| Tap density | g/ml | 1,75 | 1,69 | 1,98 |
| BET specific surface area | m²/g | 44 | 50 | 28 |
| Ni | mol% | 88,0 | 91,0 | 88,0 |
| Co | mol% | 9,0 | 4,0 | 9,0 |
| AI | mol% | 3,0 | 5,0 | 3,0 |

### Peak intensity of diffraction peak of nickel composite hydroxide having a secondary particle diameter of D90 or more

Of the nickel composite hydroxides of Examples 1 and 2 and Comparative Example, a nickel composite hydroxide having a secondary particle diameter of D90 or more was fractionated by airflow classification. The fractionated nickel composite hydroxide having a secondary particle diameter of D90 or more, had a secondary particle diameter of 20.1 µm in Example 1, of 22.5 µm in Example 2, and of 22.6 µm in Comparative Example, which values were larger than that of D90 of the nickel composite hydroxide before the fractionation. With respect to the nickel composite hydroxide having a secondary particle diameter of D90 or more, a peak intensity of the diffraction peak appearing in the range of 2θ = 8.0 ± 2.0° in powder X-ray diffraction measurement using CuKα rays and a peak intensity of the diffraction peak appearing in the range of 2θ = 19.0 ± 2.0° in powder X-ray diffraction measurement using CuKα rays, were measured, respectively. Specifically, powder X-ray diffraction measurement was carried out by using an X-ray diffractometer (Ultima IV, manufactured by Rigaku Co., Ltd.). Nickel composite hydroxide powder having a secondary particle diameter of D90 or more was filled in a dedicated substrate, and the measurement was carried out by using a Cu-Kα radiation source (40 kV/40 mA) under the conditions of a diffraction angle 2θ = 5° to 80°, and a sampling width of 0.03°, and a scan speed of 20°/min to obtain a powder X-ray diffraction pattern. Smoothing processing and background removal processing were carried out by using an integrated powder X-ray analysis software PDXL, and peak intensity α of the diffraction peak appearing in the range of 8.0 ± 2.0° and peak intensity β of the diffraction peak appearing in the range of 19.0 ± 2.0° were measured from the powder X-ray diffraction patterns to calculate the peak intensity ratio β/α.

The powder X-ray diffraction patterns of the nickel composite hydroxides having a secondary particle diameter of D90 or more of Example 1 and Comparative Example are shown in FIG. 1 (they are shown as "Example 1" and "Comparative Example", respectively). Peak intensity α, peak intensity β, and the peak intensity ratio β/α of each of Examples 1 and 2 and Comparative Example are shown in Table 2 below.

**[Table 2]**

| | Example 1 | Example 2 | Comparative Example |
|---|---|---|---|
| Peak intensity α | 1178 | 1069 | 655 |
| Peak intensity β | 8485 | 10457 | 9786 |
| Peak intensity ratio (β/α) | 7,2 | 9,8 | 14,9 |

### Production of positive electrode active material using each of nickel composite hydroxides of Examples and Comparative Example as precursor

Of the nickel composite hydroxides of Examples 1 and 2 and Comparative Example, the positive electrode active material was produced by using each of nickel composite hydroxides of Example 1 and Comparative Example. When producing the positive electrode active material, preliminarily, a step of subjecting a nickel composite hydroxide to an oxidation treatment to prepare a nickel composite oxide was carried out. In the oxidation treatment, the nickel composite oxides of Example 1 and Comparative Example were prepared by calcination at a temperature of 690°C for 5 hours in an air atmosphere. Then, lithium hydroxide powder was added and mixed with each of the nickel composite oxides of Example 1 and Comparative Example so that the molar ratio of Li/(Ni + Co + Al) was 1.07 to obtain mixed powder of the nickel composite hydroxide and lithium hydroxide. The obtained mixed powder was calcined to obtain a lithium metal composite oxide particle. The calcination conditions were set to a calcination temperature of 700°C, a rate of temperature rise of 200°C/h, and a calcination time of 6 hours under an oxygen atmosphere. Moreover, a box furnace was used for the calcination.

The lithium metal composite oxide particles obtained as described above were washed with water. The washing was carried out by adding the lithium metal composite oxide to pure water, stirring the slurry liquid obtained for 10 minutes, and dehydrating the liquid.

Then, the wet cake obtained by the above washing was heat-treated at 150°C for 12 hours in a vacuum atmosphere to obtain a positive electrode active material.

A positive electrode plate was fabricated by using the positive electrode active material obtained as described above to assemble a battery for evaluation by using the positive electrode plate fabricated. Specifically, the obtained positive electrode active material, the conductive agent (acetylene black), and the binder (polyvinylidene difluoride) were mixed respectively at a weight ratio of 92 : 5 : 3, and N-methyl-2- pyrrolidone was added thereto, and the mixture was kneaded and dispersed to prepare a slurry. An aluminum foil was coated with the slurry obtained by using a baker type applicator and the coating foil was dried at 60°C for 3 hours and at 150°C for 12 hours. A positive electrode plate was used such that the roll-pressed electrode after the drying was punched out to an area of 1.65 cm².

Moreover, the battery for evaluation was fabricated as follows. The positive electrode plate obtained as described above was placed on a lower lid of a part (manufactured by Hohsen Corp.) for a coin-type battery R2032 with the aluminum foil surface facing down, and a laminated film separator (laminated with a heat-resistant porous layer (thickness of 16 µm) on a porous polyethylene film) was placed the positive electrode plate. 300 µl of an electrolytic solution was injected therein. The electrolytic solution was used such that LiPF₆ was dissolved at a concentration of 1 mol/l in a mixed liquid of ethylene carbonate (hereinafter, may be referred to as EC), dimethyl carbonate (hereinafter, may be referred to as DMC), and ethyl methyl carbonate (hereinafter, may be referred to as EMC) at 30 : 35 : 35 (volume ratio) (hereinafter, may be denoted to as LiPF₆/EC + DMC + EMC). A lithium secondary battery (coin-type battery R2032) was fabricated by using a lithium metal as a negative electrode, placing the negative electrode on an upper side of the laminated film separator, covering the top via a gasket, and caulking it with a caulking machine.

### Battery evaluation items

### (1) Discharge capacity

Charge/discharge were carried out under the following conditions, and a discharge capacity of an initial charge/discharge was defined as the discharge capacity. The discharge capacity was evaluated as a ratio of a discharge capacity to that of Examples being 100.

### Test temperature: 25°C

Maximum charge voltage of 4.3 V, charge current of 0.2 C, constant current and constant voltage charge
Minimum discharge voltage of 2.5 V, discharge current of 0.2 C, constant current discharge

### (2) Charge/discharge efficiency

The charge/discharge efficiency was defined as a ratio of an initial discharge capacity to the initial charge capacity in the aforementioned charge/discharge test. It is noted that the charge/discharge efficiency was evaluated as a ratio of a charge/discharge efficiency to that of Examples being 100.

### (3) Rate characteristics

The rate characteristics were obtained by carrying out charge/discharge under the following conditions, assuming that 1.0 C was 200 mAh/g, and defined as a discharge capacity at 3.0 C. It is noted that the rate characteristics were evaluated as a ratio of a discharge capacity to that of Examples being 100.

### Test temperature: 25°C

Maximum charge voltage of 4.3 V, charge current of 1.0 C, constant current and constant voltage charge
Minimum discharge voltage of 2.5 V, discharge current of 3.0 C, constant current discharge

The results of battery evaluation are shown in Table 3 below.

**[Table 3]**

| | Example 1 | Comparative Example |
|---|---|---|
| Discharge capacity (mAh/g) | 100 | 96,9 |
| Charge/discharge efficiency (%) | 100 | 94,5 |
| Rate characteristics (3C, mAh/g) | 100 | 95,6 |

From Tables 2 and 3, Example 1 in which the positive electrode active material was fabricated by using the precursor having the peak intensity ratio (β/α) of 7.2, could obtain the excellent discharge capacity, the charge/discharge efficiency and the rate characteristics. In addition, from Table 1, the tap density of the precursor was 1.75 g/ml, and the BET specific surface area was 44 m²/g in Example 1. Further, even Example 2 in which the peak intensity ratio (β/α) was 9.8, which was lower than the peak intensity ratio (β/α) of 13.0 or less like in Example 1, was found to be able to obtain the excellent discharge capacity, the charge/discharge efficiency and the rate characteristics, which were similar as in Example 1. From Table 1, Example 2 exhibited the tap density of the precursor of 1.69 g/ml and the BET specific surface area of 50 m²/g. From Tables 2 and 3, on the other hand, Comparative Example in which the positive electrode active material was fabricated by using the precursor having the peak intensity ratio (β/α) of 14.9, deteriorated the discharge capacity and the charge/discharge efficiency as well as rate characteristics as compared with Example 1. It is noted from Table 1 that Comparative Example exhibited the tap density of the precursor of 1.98 g/ml and the BET specific surface area of 28 m²/g.

### Industrial Applicability

The nickel composite hydroxide of the present invention can be utilized as the precursor of the positive electrode active material, capable of obtaining the positive electrode active material that can exhibit the high discharge capacity, high charge/discharge efficiency, and rate characteristics, by being mounted on the secondary battery using the non-aqueous electrolyte, and thereby it can be utilized in a wide range of fields such as mobile devices and vehicles.

## Claims

1. A nickel composite hydroxide that is a precursor of a positive electrode active material of a non-aqueous electrolyte secondary battery, comprising Ni, Co, and one or more additive metal elements M selected from the group consisting of Mn, Al, Fe, and Ti,
wherein when a peak intensity of a diffraction peak appearing in a range of 2θ = 8.0 ± 2.0° in powder X-ray diffraction measurement using CuKα rays is defined as α, and a peak intensity of a diffraction peak appearing in a range of 2θ = 19.0 ± 2.0° in powder X-ray diffraction measurement using CuKα rays is defined as β, of the nickel composite hydroxide having a secondary particle diameter having a cumulative volume percentage of 90% by volume (D90) or more, a value of β/α is 13.0 or less.

2. The nickel composite hydroxide according to claim 1, wherein a tap density is 1.50 g/ml or more and 1.90 g/ml or less.

3. The nickel composite hydroxide according to claim 1 or 2, wherein a BET specific surface area is 30 m²/g or more and 60 m²/g or less.

4. The nickel composite hydroxide according to any one of claims 1 to 3, wherein a molar ratio of Ni : Co : M is 1-x-y : x : y, where 0 < x ≤ 0.2 and 0 < y ≤ 0.1.

5. A positive electrode active material of a non-aqueous electrolyte secondary battery, wherein the nickel composite hydroxide according to any one of claims 1 to 4 is calcined with a lithium compound.

6. A method for producing a nickel composite hydroxide that is a precursor of a positive electrode active material of a non-aqueous electrolyte secondary battery, comprising Ni, Co, and one or more additive metal elements M selected from the group consisting of Mn, Al, Fe, and Ti, the method comprising:
a neutralization reaction step of mixing an aqueous solution containing at least a Ni salt, a Co salt, and a salt of the additive metal element, an aqueous solution containing an ammonium ion donor, and a pH adjuster in a reaction vessel, and performing a coprecipitation reaction in the mixed liquid to obtain a crude nickel composite hydroxide, wherein when a peak intensity of a diffraction peak appearing in a range of 2θ = 8.0 ± 2.0° in powder X-ray diffraction measurement using CuKα rays is defined as α', and a peak intensity of a diffraction peak appearing in a range of 2θ = 19.0 ± 2.0° in powder X-ray diffraction measurement using CuKα rays is defined as β', of the crude nickel composite hydroxide, an ammonia concentration and a pH based on a liquid temperature of 40°C, of the mixed liquid are controlled so that a value of β'/α' is 13.0 or less; and
a solid-liquid separation step of washing the crude nickel composite hydroxide obtained in the neutralization reaction step with an alkaline aqueous solution followed by solid-liquid separation to obtain the nickel composite hydroxide.

7. The method for producing a nickel composite hydroxide according to claim 6, wherein a molar ratio of Ni : Co : M is 1-x-y : x : y, where 0 < x ≤ 0.2 and 0<y≤0.1.

8. The method for producing a nickel composite hydroxide according to claim 6 or 7, wherein the ammonia concentration is less than 12.0 g/L, and the pH based on a liquid temperature of 40°C is 11.0 or more and 12.5 or less.

9. The method for producing a nickel composite hydroxide according to any one of claims 6 to 8, wherein in the solid-liquid separation step, a solid phase is washed with water after the solid-liquid separation.

10. The method for producing a nickel composite hydroxide according to any one of claims 6 to 9, further comprising a drying step of drying the nickel composite hydroxide after the solid-liquid separation step.

11. A method for producing a positive electrode active material of a non-aqueous electrolyte secondary battery using a nickel composite hydroxide as a precursor, comprising Ni, Co, and one or more additive metal elements M selected from the group consisting of Mn, Al, Fe, and Ti, the method comprising:
a neutralization reaction step of mixing an aqueous solution containing at least a Ni salt and a Co salt, an aqueous solution containing a salt of the additive metal element, a pH adjuster, and an aqueous solution containing an ammonium ion donor in a reaction vessel, and performing a coprecipitation reaction in the mixed liquid to obtain a crude nickel composite hydroxide, wherein when a peak intensity of a diffraction peak appearing in a range of 2θ = 8.0 ± 2.0° in powder X-ray diffraction measurement using CuKα rays is defined as α', and a peak intensity of a diffraction peak appearing in a range of 2θ = 19.0 ± 2.0° in powder X-ray diffraction measurement using CuKα rays is defined as β', of the crude nickel composite hydroxide, an ammonia concentration and a pH based on a liquid temperature of 40°C, of the mixed liquid are controlled so that a value of β'/α' is 13.0 or less;
a solid-liquid separation step of washing the crude nickel composite hydroxide obtained in the neutralization reaction step with an alkaline aqueous solution followed by solid-liquid separation to obtain the nickel composite hydroxide;
a step of adding a lithium compound to the obtained nickel composite hydroxide to obtain a mixture of the lithium compound and the nickel composite hydroxide, or a step of subjecting the obtained nickel composite hydroxide to an oxidation treatment to prepare a nickel composite oxide followed by addition of a lithium compound to obtain a mixture of the lithium compound and the nickel composite oxide; and
a step of calcining the mixture.

12. A method for producing a positive electrode active material of a non-aqueous electrolyte secondary battery, comprising: a step of adding a lithium compound to the nickel composite hydroxide according to any one of claims 1 to 4 to obtain a mixture, or a step of subjecting the nickel composite hydroxide according to any one of claims 1 to 4 to an oxidation treatment to prepare a nickel composite oxide followed by addition of a lithium compound to obtain a mixture of the lithium compound and the nickel composite oxide; and a step of calcining the mixture.
